# EUROPEAN PATENT SPECIFICATION

(11) **EP 0 197 694 B1**
(45) Date of publication and mention of the grant of the patent: **09.02.1994**
(21) Application number: 86302148.1
(22) Date of filing: 24.03.1986
(51) Int. Cl.: F01D 5/28, F01L 3/02, F02F 7/00, F01L 1/14

(54) **A metal-ceramic combination**
Keramikmetallverbindung
Connexion métal-céramique

(30) Priority: 25.03.1985 JP 60352/85
(43) Date of publication of application: 15.10.1986
(73) Proprietor: NGK INSULATORS, LTD., Nagoya-shi, Aichi 467 (JP)
(72) Inventor: Oda, Isao, Nagoya-City Aichi Pref. (JP); Ishida, Yoshihiko, Nagoya City Aichi Pref. (JP)
(74) Representative: Paget, Hugh Charles Edward

(56) References cited:
- EP-A- 0 142 334
- CH-A- 304 836
- DE-A- 2 845 716
- US-A- 2 297 508
- US-A- 2 891 525
- US-A- 3 666 302
- M.T.Z. MOTORTECHNISCHE ZEITSCHRIFT, vol. 44, no. 6, June 1983, pages 225-229, Schwäbisch Gmünd, DE; P. WAIZER et al.: "Hochtemperaturkeramik für Verbrennungskraftmaschinen"
- PATENTS ABSTRACTS OF JAPAN, vol. 8, no. 220, (M-330) [1657], 6th October 1984; & JP - A - 59 103 902 (MITSUBISHI JUKOGYO K.K.) 15-06-1984

## Description

The present invention relates to use of metal-ceramic combinations as engine parts and more particularly, to such use of mechanical elements composed of a metallic member and a ceramic member combined with the metallic member.

Ceramics such as zirconia, silicon nitride, silicon carbide and the like are superior in mechanical strength, heat resistance and abrasion resistance, so that they have attracted attention as materials for structural components to be used in high temperature environments or anti-abrasion parts such as gas-turbine engine parts, diesel engine parts, etc. However, ceramics are relatively inferior, being generally hard and brittle, to metallic materials in molding and finishing properties. Further, it is difficult to form mechanical elements such as engine parts, from a ceramic material alone, owing to its poor toughness, and therefore, ceramics are generally used in a form of composite structure wherein a metallic member is combined with a ceramic member.

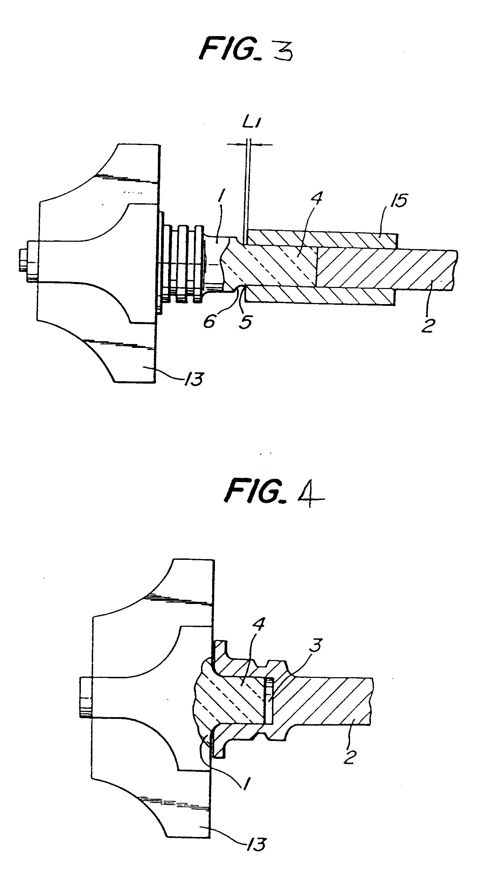

As mechanical composite structures comprising a metallic member and ceramic member in metal-ceramic combinations to be used for engine parts, there are known, for example, a structure as shown in Figure 3 of the attached drawings, wherein a protrusion is provided en bloc on base 1 of ceramic member, e.g. a rotary shaft of turbine wheel, forming an easement portion on the base and around the root of the protrusion, having its cross-sectional area gradually increasing towards the base, and the protrusion is combined with metallic member 2, e.g. a rotary shaft of compressor wheel, by shrink fitting a metallic cylindrical collar 15 on and around the peripheral surfaces of the protrusion and the metallic member (JP-A-57-20,061), and a structure as shown in Figure 4, wherein protrusion 4 of a ceramic member, e.g. a rotary shaft of turbine wheel, is fitted tightly into recess 3 provided at an end of metallic member 2, e.g. a revolving shaft of compressor wheel (US-A-3,666,302).

However, those conventional combination structures have a shortcoming as follows.

Since the edge of joint portion of the metallic member is so close to the easement portion of the protrusion of ceramic member, a large stress concentration develops in the easement. Namely, when a bending load is applied to a metal-ceramic combination having a conventional combination structure as shown in Figure 3, stress concentration caused by bending overlap s a stress-concentrated portion resulted from shrink fitting, thereby developing into a large stress concentration at the easement portion where the structure will eventually break.

Also in the prior art is a disclosure of a ceramic member with a cylindrical protrusion fitted into a cylindrical recess of a metallic member, with a easement portion of gradually increasing sectional area at the root of the protrusion. (P. Walzer et al, "Hochtemperaturkeramik für Verbrennungskraftmaschinen", in MTZ MOTORTECHNISCHE ZEITSCHRIFT, vol. 44, no. 6, June 1983, pages 225-229, Schwäbisch Gmund, in particular figure 6A on page 228). Thus this document discloses the features of the first part of present claim 1.

An object of the present invention is to provide, for use as an engine part, a metal-ceramic combination in which a ceramic member is combined with a metallic member by means of force fitting, while preventing an excessively large stress concentration from being developed caused by overlapping of stress-concentration formed at an edge of their fitting surface or interface, with stress concentration in the ceramic member formed by application of a bending load, and thereby to provide a metal-ceramic combination with an improved strength in toto.

The present invention is set out in claim 1. Dependent claims 2 to 8 concern particular embodiments of the invention. Preferably the clearance (L₁) is 1.0 mm or more.

The term "edge of joint interface" used in this specification and appended claims is defined to mean, as shown in Figures of the attached drawings, the edge 5 nearest the ceramic base 1, of the surfaces of the ceramic member in contact with metallic member 2. Also, the term "beginning point of the easement" used herein is defined to mean point 6 where the cross-sectional area of the easement portion on and around ceramic protrusion 4 begins to increase.

Some embodiments of the invention will now be described by way of example and with reference to the accompanying drawings in which:
Figure 1, is a longitudinal sectional view of a metal-ceramic combinations for use as an engine part in accordance with the present invention.
Figure 2 is also a part longitudinal sectional view showing a joint of an exhaust valve member which is for use in an engine according to the present invention; and
Figures 3 and 4 are partly longitudinal sectional views of respective conventional metal-ceramic combinations.

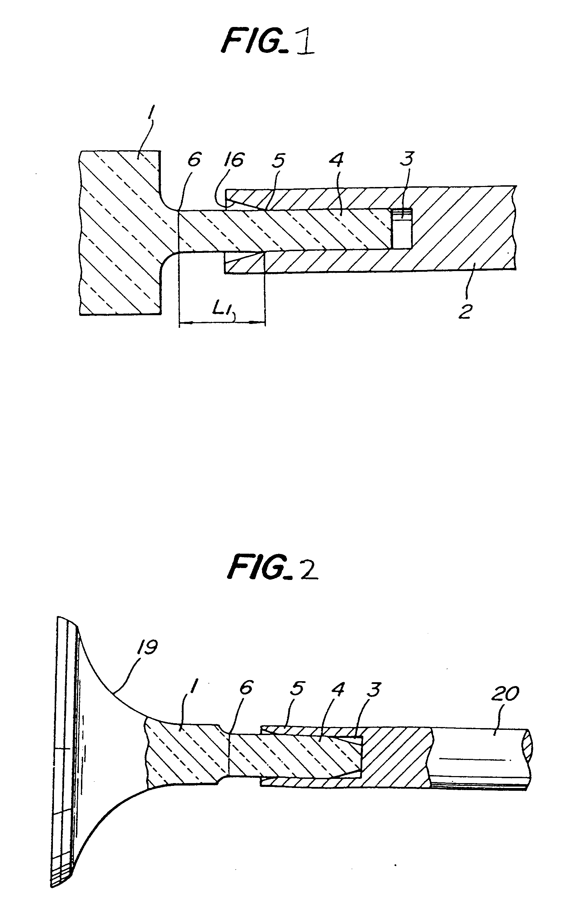

In Figure 1, ceramic member 1 is combined with metallic member 2, by fitting protrusion 4 provided en bloc on base 1 of ceramic member tightly into recess 3 provided in metallic member 2, in such a manner that clearance L₁ is left between edge 5 of joint interface and beginning point 6 of the easement.

In the metal-ceramic combination for use as an engine part according to the present invention, a clearance L₁ of 0.5 mm or more is provided between edge 5 of joint interface and beginning point 6 of the easement, so that stress concentration formed by application of a bending load and a stress-concentrated portion formed by the joint may not overlap thus preventing development of an excessively large stress concentration otherwise resulting from combination of the two stress concentrations. The dimension of clearance L₁ is preferably 0.5 mm or more and particularly preferably 1 mm or more.

In the case where clearance L₁ is smaller than 0.5 mm, stress concentration in the combination formed by application of a bending load overlaps and combines with the stress-concentrated portion resulted from the joint, thereby developing into a large stress concentration, which is not desirable owing to the fact that the root of ceramic protrusion tends to break in the course of combination of the metallic member with the ceramic member or during finishing or use of the metal-ceramic combinations.

According to the invention, the combination of recess 3 on the metallic member with protrusion 4 on the ceramic member is effected by force fitting.

A force fit is a method of fitting by applying a pressing load to the protrusion of ceramic member to push it forcibly into the recess or bore of the metallic member. Since the dimensional difference between outside diameter (O.D.) of the ceramic protrusion and inside diameter (I.D.) of the recess or bore of the metallic member is absorbed by deformation of the metallic member, the tolerances in finished dimension of O.D. of the ceramic protrusion and I.D. of the recess or bore of the metallic member before a force fit, i.e. push-in-fit, may be larger than in the case of shrink fit and expansion fit. Therefore, the force fit is preferred as a method for combining members having a fitted portion relatively small in dimensions. The shape and size of portions to be forcibly fitted together are properly designed so that the ceramic member or metallic member may not be broken by the stress applied during push-in-fitting. Besides, the dimensional difference between O.D. of the protrusion of ceramic member and I.D. of the recess or bore of metallic member is properly determined so that the fitted portion can possess a sufficiently large clamping force corresponding to use conditions of the metal-ceramic combination of the present invention, while both the ceramic member and metallic member may not break during push-in-fitting. For this purpose, the above-mentioned dimensional difference is preferably that the O.D. of the protrusion of ceramic member is 0.1%-10% larger, than the I.D. of the recess or bore of metallic member and more preferably 1%-5% larger. If the dimensional difference is smaller than 0.1%, the clamping force of forcibly fitted portion is so insufficient that there are fears of separation by slipping out or loosening of the forcibly fitted portion during use and so it is not preferred. When the dimensional difference exceeds 10%, the ceramic member or metallic member may break during push-in-fitting, so it is also not preferred. Further, a stable joint strength can be obtained by setting the above-mentioned dimensional difference relatively large when hardness of the portion to be fitted of metallic member is low, or relatively small when the hardness is high. The force fit may be performed either at room temperature or by heating the metallic member only, or both the metallic member and ceramic member. However, the force fit process performed by heating both members is most preferred because the heating of both members will reduce resistance to deformation of the metallic member, whereby a load required for pushing-in can be decreased, so that breakage of the ceramic member or metallic member will not occur and moreover, the clamping force will increase, based on a difference in thermal expansion between the both members, during cooling from force fit temperatures. It is preferred that the heating temperature at which both the ceramic member and metallic member are heated during force fitting, is selected to be not higher than the heat-treatment temperature of metallic member or the softening temperature of surface hardened layer of metallic member, and moreover, be not lower than a use temperature of the forcibly fitted portion.

Here, the heat-treatment temperature of metallic member is meant to imply a heat-treatment temperature for adjusting the hardness of metallic member, which is equivalent to, for instance, a precipitation hardening treatment temperature when the metallic member comprises a precipitation hardening type alloy or a temper temperature in the case of a quench hardened steel. Further, the softening temperature of surface hardened layer of metallic member is equivalent to a softening temperature of nitride layer when the surface hardening has been effected by nitriding, and to a temper temperature when by surface quenching.

Furthermore, as a metal material used in the metal-ceramic combination of the present invention, there can be used precipitation hardening type alloys or any commercially available metal materials which can undergo surface hardening by means of nitriding, carbonitriding, surface quenching, induction hardening, electro-discharge hardening, plating, a combination thereof, etc.

In the case where the metal-ceramic combination of the present invention is utilized to fabricate a turbocharger rotor, surfaces of a metallic arbor, i.e. a metallic member, are hardened, whereby abrasion resistance of surfaces to contact with bearings, of the metallic arbor, is improved. When a precipitation hardening type alloy is employed as a material for the metallic arbor, the precipitation hardening treatment is effected after a ceramic arbor, i.e. ceramic member, has been combined with the metallic arbor. The precipitation hardening type alloy in such a case is preferably at least any one of maraging steels, precipitation hardening type stainless steels and precipitation hardening type super alloys.

Further, in the case where the hardening of the metallic member is effected by nitriding, there is preferably employed at least any one of chrome-containing alloys such as stainless steels, nickel-chrome-molybdenum steels, chrome-molybdenum steels, aluminum-chrome-molybdenum steels, alloy tool steels and the like. Furthermore, when the hardening of the metallic arbor is effected by surface quenching, at least any one of nickel-chrome-molybdenum steels, chrome-molybdenum steels, nickel-chrome steels and chrome steels is preferred.

Such a surface hardening of the metallic arbor may be performed either before or after combining of a ceramic arbor with the metallic arbor, and, however, it is preferred to perform before finishing of the metallic member.

The endmost surface near ceramic member, of metallic member is a reverse conical surface 16 shown in Figure 1. The longitudinal section along the axis of reverse cone 16 may comprise straight lines as shown in Figure 1, or curved lines.

Figure 2 shows an exhaust valve which is another metal-ceramic combination used as an engine part according to the present invention, wherein protrusion 4 formed en bloc on base 1 of ceramic valve body 19 by the valve stem side is fitted tightly into recess 3 provided in metallic valve stem 20. By forming a ceramic member a light weight valve body having a superior heat resistance, it is possible to provide an exhaust valve also of light weight and having excellent heat resistance.

Ceramic materials constituting the metal-ceramic combinations used in the present invention may be selected, according to their intended uses, from silicon nitride, silicon carbide; sialon, zirconia, alumina, mullite, beryllia, etc. When, for example, a turbo-charger rotor is composed of a metal-ceramic combination of the invention, its turbine wheel to be subjected to high temperatures desirably consists of silicon nitride or silicon carbide having an excellent high temperature strength.

Further, when a tappet having a ceramic, cam-contact surface is composed of a metal-ceramic combination for use as an engine part within the invention, zirconia or silicon nitride which is superior in strength and toughness is desirably employed as the ceramic material.

Furthermore, a ceramic part and a metallic part forming an engine part for use in accordance with the invention can each consist of more than one material. For instance, when a gas-turbine rotor is composed of a metal-ceramic combination, the ceramic turbine-wheel part to be subjected to high temperatures is formed from silicon carbide having excellent high temperature strength, anti-creeping and anti-oxidizing abilities, the ceramic arbor part to be exposed to a temperature lower than that for the turbine wheel, is made of silicon nitride having a superior toughness, and these two parts are bonded with each other by a heat-resistant adhesive, etc., to form a ceramic two-piece part. Then a gas-turbine rotor having excellent heat-durability, high strength and high toughness can be obtained.

Besides, a gas-turbine rotor having a metallic revolving shaft, i.e. a metallic member, can be of lower cost in its manufacture while maintaining its reliability, by forming the part of the metallic revolving shaft near the ceramic rotor, for which heat-resistance is required, from a heat resistant alloy, and the other part to be subjected to lower temperatures, from a low price metal, and thereafter combining those two parts together to fabricate the metallic revolving shaft.

An embodiment of the present invention will be described in the following example.

### Example

Two ceramic members each consisting of a valve body 30 mm high and 40 mm O.D. and an axis 25 mm long and 13 mm O.D. were formed en bloc from silicon nitride by a normal pressure sintering process. The axis of this ceramic member was shaped into a protrusion 20 mm long and 9 mm O.D. having a radius of curvature of 1.0 mm at the easement portion of its root.

Further, two aluminum-chrome-molybden steel (JIS SACM 645) members having an overall length of 200 mm and O.D. of 13.0 mm were formed into metallic valve stems provided at one end with a recess of 8.8 mm I.D. and 14 mm and 19 mm deep respectively.

The protrusion of the above-mentioned ceramic members were force fitted into the recess of the metallic valve stems at 350°C, so that distance L₁ was be 0.1 mm and 5.0 mm respectively, between the edge of joint interface and the beginning point of the easement, in the fabricated metal-ceramic combination as shown in Figure 2.

Thereafter, in order to form the metal-ceramic combination into an exhaust valve having a shape as shown in Figure 2, the periphery of the metallic member, i.e. the metallic valve stem, was finished. During the above-mentioned finishing, the metal-ceramic combination having distance L₁ of 0.1 mm was broken at the base of the easement portion of ceramic member.

On the other hand, the metal-ceramic combination having distance L₁ of 5.0 mm was able to be formed, with no problems, into an exhaust valve as shown in Figure 2.

As is clear from the above, the metal-ceramic combination for use as an engine part according to the present invention is provided with a clearance of 0.5 mm or more between the edge of joint interface and the beginning point of the easement, so that even if a bending load is applied to the metal-ceramic combination, stress concentration caused by bending does not overlap the stress concentration resulted from the joint, and, therefore, it can withstand, since the applied stress is so small, a load larger than a fracture load for conventional metal-ceramic combinations. Furthermore, for a same load, the ceramic member can be formed of a smaller size.

Particularly, a turbocharger rotor used as an engine part according to the present invention, wherein a metallic shaft is combined with a ceramic turbine wheel by a ceramic shaft connecting to the turbine wheel, since the turbine weighs little and is composed of ceramics having an excellent high temperature strength, can be a turbocharger rotor of high efficiency.

Besides, since a tappet can be provided with its cam-contact surface of high abrasion-resistance also by fitting a metal-ceramic combination thereinto, a tappet having an excellent durability can be produced.

Further, a light weight exhaust valve having an improved heat resistance can be obtained also as a metal-ceramic combination.

By using the metal-ceramic combination herein described either alone or further combined with other metallic members, the metal-ceramic combinations used as engine parts according to the present invention can be applied to structural parts which suffer high temperatures and/or repeated stresses, for instance, engine parts such as a turbocharger rotor, piston, tappet, intake or exhaust valve, rocker arm, cam, etc., making the most of heat resistance, oxidation resistance, heat insulating ability, light weighing property and high temperature strength, of ceramics.

## Claims

1. Use as an engine part of a metal-ceramic combination wherein a monobloc ceramic member comprising a base portion (1), a cylindrical protrusion (4) extending from the base and an easement portion having its cross-sectional area gradually increasing towards the base (1) formed on and around the root of the protrusion (4) is combined with a rigid metallic member (2) by fixing the said protrusion (4) in a cylindrical recess or bore of the metallic member, characterized in that the fixing is by force fitting, there is a clearance (L₁) of 0.5 mm or more between the edge (5) of the joint interface and the beginning point (6) of the easement, and the metallic member has at its end facing towards the ceramic member a cylindrical outer surface and a reverse tapered inner surface (16).

2. Use as claimed in claim 1, wherein the clearance (L₁) is 1.0 mm or more.

3. Use as claimed in claim 1 or claim 2, wherein the ceramic member comprises at least one of silicon nitride, silicon carbide, sialon, zirconia, mullite, alumina and beryllia.

4. Use as claimed in any one of claims 1 to 3, wherein the ceramic member is a part of the rotary shaft, at the turbine wheel side, of a turbocharger rotor and the metallic member is a part of the shaft, at the compressor wheel side, of the turbocharger rotor.

5. Use as claimed in any one of claims 1 to 4, wherein at least a part of the metallic member has been hardened by precipitation hardening, nitriding or induction hardening or a combination thereof.

6. Use as claimed in claim 5, wherein the metallic member is of at least one metal selected from stainless steels, nickel-chrome-molybden steels, chrome-molybden steels, aluminum-chrome-molybden steels, maraging steels and precipitation hardening type super alloys.

7. Use as claimed in any one of claims 1 to 3, wherein the ceramic member forms part of the cam-contact portion of a tappet and the metallic member is a tappet body or a member joining the ceramic member to a tappet body.

8. Use as claimed in any one of claims 1 to 3, wherein the ceramic member is at least a part of valve body of an exhaust valve and the metallic member is a valve stem of the exhaust valve.

## Patentansprüche

1. Verwendung einer Metall-Keramik-Kombination als Motorteil, bei der ein Monoblock-Keramikelement, das einen Basisabschnitt (1), einen zylindrischen Vorsprung (4), der sich von der Basis erstreckt, und einen an der und um die Wurzel des Vorsprungs (4) gebildeten Übergangsabschnitt, dessen Querschnittsfläche sich zur Basis (1) hin allmählich vergrößert, umfaßt, mit einem starren Metallelement (2) kombiniert ist, indem der genannte Vorsprung (4) in einer zylindrischen Ausnehmung oder Bohrung des Metallelements befestigt ist, dadurch gekennzeichnet, daß das Befestigen durch Preßpassung erfolgt, daß ein Zwischenraum (L₁) von 0,5 mm oder mehr zwischen der Kante (5) der Verbindungsgrenzfläche und dem Anfangspunkt (6) des Übergangs vorgesehen ist und daß das Metallelement an seinem dem Keramikelement zugewandten Ende eine zylindrische Außenfläche und eine sich umgekehrt verjüngende Innenfläche (16) aufweist.

2. Verwendung nach Anspruch 1, worin der Zwischenraum (L₁) 1,0 mm oder mehr beträgt.

3. Verwendung nach Anspruch 1 oder 2, worin das Keramikelement zumindest eines aus Siliziumnitrid, Siliziumkarbid, Sialon, Zirkonerde, Mullit, Tonerde oder Beryllerde umfaßt.

4. Verwendung nach einem der Ansprüche 1 bis 3, worin das Keramikelement ein an der Turbinenradseite befindlicher Teil der Rotationswelle eines Turboladerrotors ist und das Metallelement ein an der Kompressorradseite befindlicher Teil der Welle des Turboladerrotors ist.

5. Verwendung nach einem der Ansprüche 1 bis 4, worin zumindest ein Teil des Metallelements durch Ausscheidungshärtung, Nitrieren oder Induktionshärtung oder eine Kombination davon gehärtet worden ist.

6. Verwendung nach Anspruch 5, worin das Metallelement aus zumindest einem Metall besteht, das aus rostfreiem Stahl, Nickel-Chrom-Molybdän-Stahl, Chrom-Molybdän-Stahl, Aluminium-Chrom-Molybdän-Stahl, Maraging-Stahl und Superlegierungen vom Ausscheidungshärtungstyp ausgewählt ist.

7. Verwendung nach einem der Ansprüche 1 bis 3, worin das Keramikelement einen Teil des Nockenberührungsabschnitts eines Ventilstößels bildet und das Metallelement ein Ventilstößelkörper oder ein Element ist, welches das Keramikelement mit einem Ventilstößelkörper verbindet.

8. Verwendung nach einem der Ansprüche 1 bis 3, worin das Keramikelement zumindest ein Teil des Ventilkörpers eines Auslaßventils ist und das Metallelement ein Ventilschaft des Auslaßventils ist.

## Revendications

1. Utilisation en tant que partie de moteur d'une combinaison métal-céramique dans laquelle un membre monobloc en céramique comprenant une partie (1) de base, une protubérance cylindrique (4) s'étendant de la base et une partie de raccordement ayant sa surface de section transversale augmentant graduellement à travers la base (1) formée sur et autour de la racine de la protubérance (4) est combinée avec un membre métallique rigide (2) par fixation de ladite protubérance (4) dans un creux ou évidement cylindrique du membre métallique, caractérisée en ce que la fixation est un ajustement en force, en ce qu'il y a un vide (L₁) de 0,5 mm ou plus entre le bord (5) de l'interface jointe et le point de départ (6) du raccordement, et en ce que le membre métallique a sur son extrémité faisant face au membre céramique une surface extérieure cylindrique et une surface intérieure effilée en sens inverse (16).

2. Utilisation selon la revendication 1, dans laquelle le vide (L₁) est de 1,0 mm ou plus.

3. Utilisation selon la revendication 1 ou 2, dans laquelle le membre céramique comprend au moins un composé choisi parmi le nitrure de silicium, le carbure de silicium, le sialon, l'oxyde de zircone, la mullite, l'alumine et l'oxyde de béryllium.

4. Utilisation selon l'une quelconque des revendications 1 à 3, dans laquelle le membre en céramique est une partie d'un arbre de rotation, sur le côté d'une roue de turbine, d'un rotor de turbochargeur et le membre métallique est une partie de l'arbre, sur le côté roue du compresseur, du rotor du turbochargeur.

5. Utilisation selon l'une quelconque des revendications 1 à 4, dans laquelle au moins une partie du membre métallique a été durci par un durcissage par précipitation, nitruration ou durcissage par induction ou une combinaison de ceux-ci.

6. Utilisation selon la revendication 5, dans laquelle le membre métallique est au moins un métal choisi parmi les aciers inoxydables, les aciers nickel-chrome-molybdène, les aciers chrome-molybdène, les aciers aluminium-chrome-molybdène, les aciers à trempe secondaire austénitiques et les super alliages de type à durcissement par précipitation.

7. Utilisation selon l'une quelconque des revendications 1 à 3, dans laquelle le membre céramique forme une partie de la partie came-contact d'un mentonnet de came et le membre métallique est un corps de mentonnet de came ou un membre joignant le membre céramique à un corps de mentonnet de came.

8. Utilisation selon l'une quelconque des revendications 1 à 3, dans laquelle le membre céramique est au moins une partie d'un corps de vanne d'une vanne d'évacuation et le membre métallique est une vanne d'arrêt d'une vanne d'évacuation.
